# EUROPEAN PATENT APPLICATION

(11) **EP 4 841 727 A1**
(43) Date of publication of application: **18.11.2026**
(21) Application number: 26178442.5
(22) Date of filing: 13.05.2026
(51) Int. Cl.: H01M 10/04, H01M 10/0587, H01M 50/46

(54) **ELECTRODE ASSEMBLY, RECHARGEABLE BATTERY INCLUDING ELECTRODE ASSEMBLY, AND BATTERY PACK**

(30) Priority: 14.05.2025 KR 20250062583
(71) Applicant: SAMSUNG SDI CO., LTD., Yongin-si, Gyeonggi-do 17084 (KR)
(72) Inventor: SUNG, Geon Kyu, 16678 Suwon-si, Gyeonggi-do (KR); CHO, Sung Joon, 16678 Suwon-si, Gyeonggi-do (KR)
(74) Representative: Meissner Bolte Partnerschaft mbB

(57) **Abstract**

An electrode assembly (200) comprises a cylindrical electrode assembly (200) comprising a laminate of stacked electrodes (210, 220) and separators (230) wound multiple times about a winding core (A). The electrode assembly (200) includes an expansion film (240) attached to an electrode (220) of the electrodes (210, 220) that is adjacent to the winding core (A).

## Description

### BACKGROUND

### 1. Field

The present invention relates to an electrode assembly, a rechargeable battery including the electrode assembly, and a battery pack including a plurality of rechargeable batteries.

### 2. Discussion of Related Art

Secondary batteries are batteries that can be discharged and recharged, unlike primary batteries that cannot be recharged. Low-capacity secondary batteries are used in small portable electronic devices such as smartphones, feature phones, laptop computers, digital cameras, and camcorders. Large-capacity secondary batteries are widely used as motor-driven power sources in hybrid vehicles, electric vehicles, and other such vehicles, as well as power storage batteries, and the like. Such secondary batteries include electrodes including a positive electrode and a negative electrode, an electrode assembly including the electrodes, a case accommodating the electrode assembly, an electrode terminal connected to the electrode assembly.

With the development of technology, batteries with high capacity are required. In many cases, a plurality of batteries electrically connected to each other may be used. For example, the batteries may be used in an electronic device in the form of a battery module including a plurality of batteries (hereinafter referred to as a "battery cell"), and/or a battery pack including a plurality of battery modules. A battery pack may be configured as a plurality of battery cells for use in an electronic device requiring high output and/or high capacity, such as an electric vehicle and the like.

A rechargeable battery includes an electrode assembly that functions as a unit structure for performing operations of charging and discharging electric power. The electrode assembly may be a cylindrical type, a winding type, a stack type, or a stack- and-folding type, according to its structure. Among these, a cylindrical electrode assembly has the advantages of a relatively large capacity and a relatively high structural stability.

The cylindrical electrode assembly may be made by winding a laminate of a long sheet-shaped positive electrode/separator/negative electrode/separator multiple times to form a cylindrical shape. During the winding process, one end of the laminate, including the separator, is inserted into a jig (mandrel) and the laminate is wound multiple times in a clockwise or counterclockwise direction. When winding is completed, the jig is removed from a winding core, thereby creating an empty space within the winding core. As charging and discharging are repeated due to the use of the rechargeable battery, the electrode expands, which may cause the electrode to move and be deformed in the winding core. As a result, the performance of the rechargeable battery may be degraded, and heat generation and ignition may occur.

The information disclosed in this section is only intended to improve understanding of the background of the present invention and may contain information that does not constitute related or prior art.

### SUMMARY OF THE INVENTION

The present invention is directed to providing an electrode assembly capable of preventing the movement of an electrode in a winding core and preventing the deformation of the electrode, despite repeated charging and discharging. The present invention is also directed to providing a rechargeable battery including the electrode assembly, and a battery pack including a plurality of rechargeable batteries. However, technical problems to be solved by the present invention are not limited to the problems described above, and other problems not mentioned herein may be clearly understood by those skilled in the art from the description herein.

According to the present invention, there is provided an electrode assembly comprising a cylindrical electrode assembly comprising a laminate of stacked electrodes and separators wound multiple times about a winding core, and an expansion film attached to an electrode of the stacked electrodes that is adjacent to the winding core.

The separator may be exposed to the winding core, and the expansion film may be attached to the electrode of the electrodes, the electrode in contact with a separator of the separators that is exposed to the winding core. The expansion film may be attached to only one surface of the electrode that is in contact with the separator. The one surface may face the winding core. The expansion film may comprise two expansion films, and the two expansion films may be attached to two opposite surfaces of the electrode that is in contact with the separator that is exposed to the winding core, respectively. The expansion film may be attached with a length of 1 to 3 turns. The electrode may include a coated portion where an active material layer is formed on at least one surface thereof and an uncoated portion where the active material layer is not provided, and the expansion film may be attached to the uncoated portion. The expansion film may be configured to expand by an electrolyte of a rechargeable battery that includes the electrode assembly. The expansion film may be formed of a material including polyvinylidene fluoride (PVDF) or a material including polyvinylidene fluoride and a binder.

In one example, the electrode assembly may be formed by winding the laminate in which the first electrode of the electrodes, a first separator of the separators, a second electrode of the electrodes, and a second separator of the separators are sequentially stacked such that the second separator is exposed to the winding core, and the expansion film may be attached to the second electrode. In another example, the first electrode may be a positive electrode and the second electrode may be a negative electrode.

A rechargeable battery includes a cylindrical case, and a cylindrical electrode comprising a laminate wound about a winding core, in the laminate, a first electrode, a first separator, a second electrode, and a second separator are sequentially stacked, with the second separator being exposed to the winding core, and with the electrode assembly accommodated in the case, wherein the electrode assembly includes an expansion film attached to the second electrode.

A battery pack includes a housing, and a plurality of rechargeable batteries inside the housing, wherein each of the plurality of rechargeable batteries includes a cylindrical case, and a cylindrical electrode assembly comprising a laminate wound about a winding core, in the laminate, a first electrode, a first separator, a second electrode, and a second separator are stacked, with the second separator being exposed to the winding core, and with the electrode assembly being accommodated in the case, wherein the electrode assembly includes an expansion film attached to the second electrode.

### BRIEF DESCRIPTION OF THE DRAWINGS

The drawings illustrate embodiments of the present invention and further describe aspects and features of the present invention together with the detailed description. But the present invention is not limited to the embodiments depicted in the drawings.
FIG. 1 illustrates a configuration of a battery pack;
FIG. 2 illustrates a configuration of a rechargeable battery of FIG. 1;
FIG. 3 illustrates a configuration of the rechargeable battery of FIG. 2;
FIG. 4 illustrates a configuration of an electrode assembly according to one embodiment;
FIG. 5 illustrates an electrode and a separator constituting the electrode assembly of FIG. 4 in a separated state.
FIG. 6 illustrates a view in which a laminate of the electrode and the separator of FIG. 5 is inserted into a mandrel and wound;
FIG. 7 illustrates an enlarged part of the wound electrode assembly;
FIG. 8 illustrates view taken along line VIII-VIII of FIG. 7.

### DETAILED DESCRIPTION OF EXEMPLARY EMBODIMENTS

Hereinafter, embodiments of the present invention will be described in detail with reference to the accompanying drawings. Terms or words used in the present specification and the appended claims should not be interpreted limited to ordinary or dictionary meanings. Rather, the terms or words should be interpreted as meanings and concepts consistent with the technical idea of this invention, based on the principle that the applicant is their own lexicographer, and can properly define the concept of the term in order to describe his or her invention in the best way. Accordingly, it is to be understood that the embodiments described herein, and the configurations shown in the drawings are only some of the embodiments of the present invention and do not represent all of the technical ideas of the invention. Also, there may be various equivalents and modifications that may be replaced for them at the time of filing.

Also, when used herein, the terms "comprise, include" and/or "comprising, including" specify the presence of the shapes, numbers, steps, actions, members, elements, and/or groups thereof mentioned and are not intended to exclude the presence or addition of one or more other shapes, numbers, steps, actions, members, elements, and/or groups thereof. Furthermore, in order to aid in understanding the invention, the accompanying drawings are not drawn to scale, and the dimensions of some components may be exaggerated. In addition, the same reference numbers may be assigned to the same components in different embodiments. The reference that two objects for comparison are 'identical' means 'substantially identical.' Therefore, the term "substantially identical" may include deviations that are considered low in the art, for example, deviations of less than 5%. Also, uniformity of a parameter over a given region may imply uniformity from an average perspective.

Although the terms "first," "second," etc. are used to describe various components, these components are not limited thereby. These terms are used to distinguish one component from another component, and unless specifically stated to the contrary, it is to be understood that a first component may be a second component. Throughout the specification, unless otherwise stated, each component may be singular or plural.

When any component is said to be disposed on the "upper surface (or lower surface)" of a component or "on (or under)" a component, this not only means that any component is disposed in contact with the upper (or lower) surface of the component, but also means that other components may be interposed between the component and any component disposed on (or under) the component. In addition, when a component is described as being "connected," "coupled," or "linked" to another component, the components may be directly connected, coupled, or linked to each other, but it should be understood that other components may be "interposed" between respective components, or that each component may be "connected," "coupled," or "linked" through other components. As used herein, the term "and/or" includes any and all combinations of one or more of the related items listed herein. Also, the use of the term "may" when describing embodiments of the present invention refers to "one or more embodiments of the present invention." Expressions such as "one or more" and "at least one" preceding a list of elements modify the list of elements as a whole and do not modify individual elements in the list.

When reference is made to "A and/or B" throughout the specification, it means A, B, or A and B unless otherwise particularly stated to the contrary. When it comes to "C to D", it means that it is greater than or equal to C and less than or equal to D unless particularly stated to the contrary. When a phrase such as "at least one of A, B, and C", "at least one of A, B, or C", "at least one of the group of A, B, and C", or "at least one of A, B, and C" is used to specify a list of elements A, B, and C, the phrase may refer to any suitable combination. The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.
While the terms such as first, second, third, and the like may be used herein to describe various elements, components, regions, layers, and/or sections, such elements, components, regions, layers, and/or sections are not intended to be limited by such terms. The terms are used to distinguish one element, component, region, layer, or section from another element, component, area, layer, or section. Thus, a first element, component, region, layer, or section discussed below may be named a second element, component, region, layer, or section without departing from the teachings of the exemplary embodiments. To describe the relationship of one element or feature to another element(s) or feature(s) as shown in the drawings, spatially relative terms such as "beneath," "below," "lower," "above," "upper," and the like may be used herein for ease of description. It will be understood that spatially relative positions are intended to encompass different orientations of the device in use or operation in addition to the orientations depicted in the drawings. For example, when a device in a drawing is inverted, an element described as "below" or "under" another element is understood to be "on" or "above" the other element. Thus, the term "below" can encompass both up and down directions.

The terms used herein are used to describe embodiments of the present invention and are not intended to limit the present invention. Hereinafter, a rechargeable battery and a battery pack including the electrode assembly according to various embodiments of the present invention will be described with reference to the accompanying drawings. In this process, thickness of the lines illustrated in the drawing or the size of the components may be exaggerated for clarity and convenience of explanation. In addition, the terms described below are defined in consideration of the function in the present invention and may vary depending on the intention or custom of the user or operator. Therefore, the definitions of these terms should be based on the contents throughout the present specification.

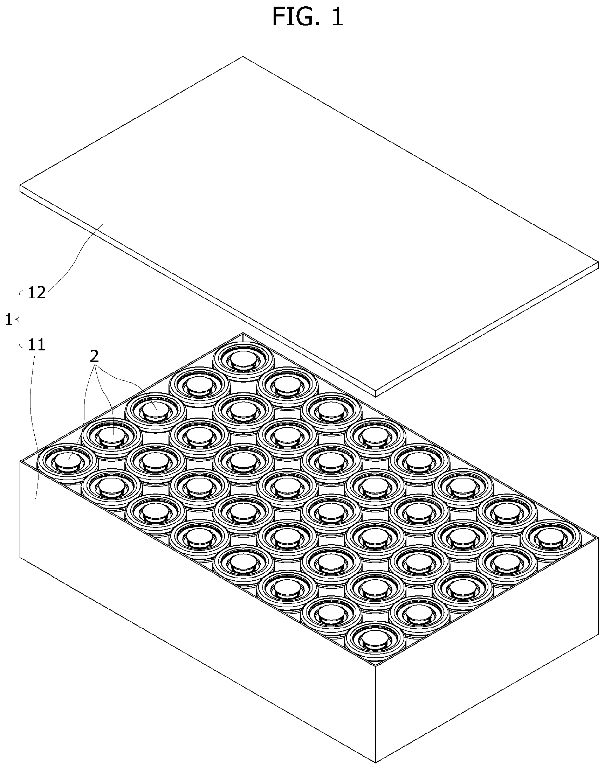

FIG. 1 illustrates an example of a configuration of a battery pack that includes a plurality of cylindrical rechargeable batteries. Referring to FIG. 1, the battery pack includes a housing 1 and a rechargeable battery 2.
The housing 1 may form an approximate exterior of the battery pack and provide a space in which the rechargeable battery 2 may be accommodated. The housing 1 may include a housing body 11 and a cover 12. The housing body 11 may have the shape of a box with an empty interior and one open side. A cross-sectional shape of the housing body 11 is not limited to the rectangular shape shown in FIG. 1 and may be designed to have various shapes such as polygonal, circular, and elliptical shapes. The cover 12 may be coupled to the housing body 11, and may close the internal space of the housing body 11. In one example, the cover 12 may be formed to have a substantially plate-like shape and may face the open side of the housing body 11. The cover 12 may be fixed to the housing body 11 by various types of coupling methods such as bolting, welding, and fitting.

The rechargeable battery 2 may function as a unit structure for storing and supplying power in the battery pack. A plurality of rechargeable batteries 2 may be provided. The plurality of rechargeable batteries 2 may be disposed to form various patterns in the housing 1, such as a grid shape, a zigzag shape, and the like. The plurality of rechargeable batteries 2 may be disposed in parallel. The number of rechargeable batteries 2 may be designed in various ways depending on the size, shape, and other attributes of the housing 1. A detailed configuration of the rechargeable battery 2 will be described below.

The plurality of rechargeable batteries 2 may be electrically connected by a bus bar (not shown). The plurality of rechargeable batteries 2 may also be connected in series and/or in parallel by the bus bar. For example, the bus bar may connect one subset of the rechargeable batteries 2 arranged in the same row inside the housing 1 in parallel with each other, and may connect two subsets of the rechargeable batteries 2 arranged in two neighboring rows in series with each other. The bus bar may be formed of an electrically conductive material such as copper, aluminum, nickel, or the like.

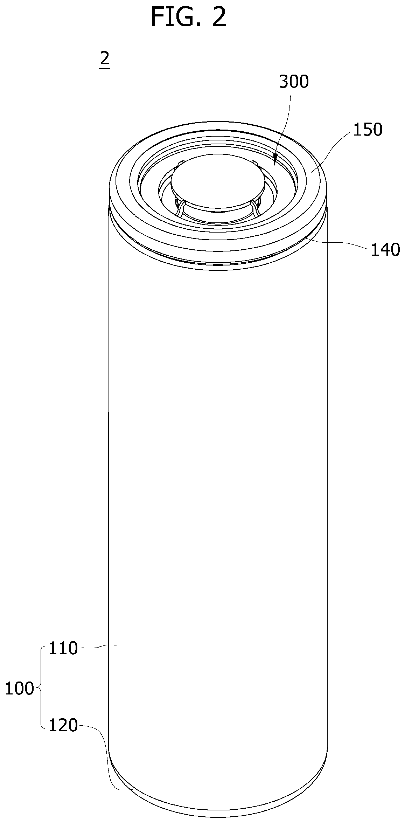

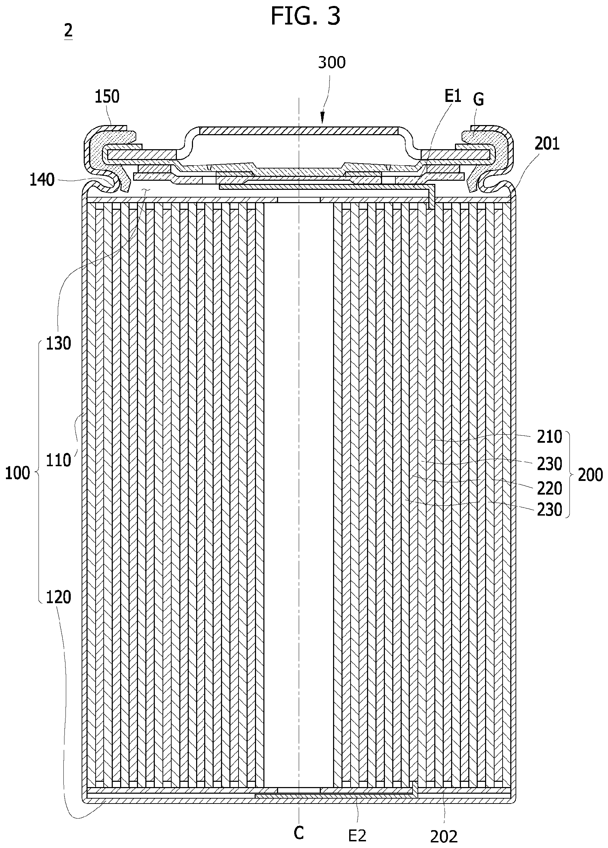

FIG. 2 illustrates an example of a configuration of a cylindrical rechargeable battery according to one embodiment. FIG. 3 illustrates a configuration of the cylindrical rechargeable battery of FIG. 2. Referring to FIGS. 2 and 3, the rechargeable battery 2 may include a case 100, an electrode assembly 200, and a cap assembly 300.

The case 100 may form an approximate exterior of the rechargeable battery 2. The case 100 may be formed of an electrically conductive material. In one example, the case 100 may be formed of a material including at least one or more forms of steel, stainless steel, aluminum, an aluminum alloy, iron, and an iron alloy. Accordingly, the case 100 may protect the electrode assembly 200 from an external impact and perform a heat dissipation function that dissipates heat accompanying the charging and discharging operations of the electrode assembly 200 to the outside.

The case 100 may include a cylindrical side wall portion 110 having a central axis C formed in the center thereof. The central axis C of the case 100 may refer to a central axis of the side wall portion 110. Both end portions of the side wall portion 110 may be perpendicular to the central axis C of the case 100, and both end portions of the side wall portion 110 may be formed to be open.

The case 100 may further include a bottom portion 120 which closes a lower end portion of the side wall portion 110. The bottom portion 120 may be formed to have a substantially circular plate shape, and may face the lower end portion of the side wall portion 110. The bottom portion 120 may be perpendicular to the central axis C of the case 100. A circumference of the bottom portion 120 may be joined to the lower end portion of the side wall portion 110. The bottom portion 120 may be integrally formed with the side wall portion 110 by a drawing process or the like, or alternatively, may also be joined to the side wall portion 110 by welding or the like after being manufactured separately from the side wall portion 110.

The case 100 may further include an opening 130 which opens an upper end portion of the side wall portion 110. The opening 130 may function as a configuration providing a path through which the electrode assembly 200 is to be inserted into the case 100 in an upper end region of the case 100, and providing a space where the cap assembly 300 to be described below may be installed. The opening 130 may refer to an empty space surrounded by the upper end region of the side wall portion 110 located at an opposite side of the bottom portion 120.

Alternatively, the case may be configured to further include a top portion for closing the side wall portion and the upper end portion thereof. In such an embodiment, the case may further include an opening for opening a lower end portion of the side wall portion. The opening may function as a configuration providing a path through which the electrode assembly 200 to be described below is inserted into the case in a lower end region of the case and providing a space where the cap assembly 300 to be described below may be installed.

The electrode assembly 200 may function as a unit structure which performs operations of charging and discharging power in the rechargeable battery 2. The electrode assembly 200 may include a first electrode 210, a second electrode 220, and a separator 230 between the first electrode 210 and the second electrode 220. The electrode assembly 200 may be in the case 100. The electrode assembly 200 may be inserted into the case 100 through the opening 130 of the case 100. The electrode assembly 200 may have a form that is wound around a winding axis. More specifically, the electrode assembly 200 may have a form that is wound around the winding axis clockwise or counterclockwise in a state where the first electrode 210, the separator 230, and the second electrode 220, and the separator 230 are stacked. Accordingly, the electrode assembly 200 may have a substantially cylindrical shape. Here, the winding axis may refer to a straight line passing through the center of the electrode assembly 200. The electrode assembly 200 may be inside the case 100 such that the winding axis is coaxial with the central axis C of the case 100.

The first electrode 210 may function as a positive electrode of the electrode assembly 200. The first electrode 210 may have the form of a foil including a metal material such as aluminum or an aluminum alloy. The type, size, shape, etc. of the first electrode 210 is not particularly limited as long as the first electrode 210 has conductivity without causing a chemical change in the rechargeable battery.

The first electrode 210 may include a substrate and a first active material layer formed on at least a portion of the substrate. The first active material layer may be formed on both surfaces of the substrate of the first electrode 210 or may be formed only on one surface of the substrate. When the first electrode 210 functions as a positive electrode, the first active material layer may include a positive electrode active material.

The positive electrode active material may be a compound capable of reversible intercalation and deintercalation of lithium (a lithiated intercalation compound). More specifically, as the positive electrode active material, one or more of composite oxides of a metal selected from the group consisting of cobalt, manganese, nickel, iron, and a combination thereof and lithium may be used.

As examples, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM).

The first active material layer may further include a positive electrode conductive material. The positive electrode conductive material may be used to impart conductivity to the first active material layer. Any electronically conductive material that does not cause an undesirable chemical change in a battery may be used. Examples of the positive electrode conductive material include a carbon-based material such as natural graphite, artificial graphite, carbon black, acetylene black, Ketjen black, carbon fibers, carbon nanofibers, carbon nanotubes, or the like, a metal-based material in the form of a metal powder or metal fiber containing copper, nickel, aluminum, silver, or the like, a conductive polymer such as a polyphenylene derivative, or a mixture thereof.

The first active material layer may further include a positive electrode binder. The positive electrode binder serves to attach particles constituting the positive electrode active material to each other. The positive electrode binder also serves to attach the positive electrode active material the substrate of the first electrode 210. Examples of the positive electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof. The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof. When the aqueous binder is used as the positive electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. As the alkali metal, Na, K, or Li may be used. The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may be electrically connected to the cap assembly 300. Since the first electrode 210 functions as the positive electrode of the electrode assembly 200, the cap assembly 300 may function as a positive electrode terminal of the battery 1. In one example, the first electrode 210 may be electrically connected to the cap assembly 300 by a first electrode tab E1. The first electrode tab E1 may be formed of a conductive metal material such as copper, a copper alloy, nickel, or a nickel alloy. The first electrode tab E1 may be located at an upper side of the electrode assembly 200, and both end portions of the first electrode tab E1 may be respectively connected to the first electrode 210 and the cap assembly 300. One end portion of the first electrode tab E1 may be directly connected to the first electrode 210 or may be indirectly connected to the first electrode 210 via a separate current collecting plate (not shown) connected to the first electrode 210. However, the first electrode 210 may be directly connected to the cap assembly 300 without the first electrode tab E1.

The second electrode 220 may function as a negative electrode of the electrode assembly 200. The second electrode 220 may have the shape of a foil including a metal material such as copper, a copper alloy, nickel, or a nickel alloy. The second electrode 220 may face the first electrode 210 at a predetermined distance from the first electrode 210. The type, size, shape, or the like of the second electrode 220 is not particularly limited as long as the second electrode 220 has conductivity without causing an undesirable chemical change in the battery.

A second active material layer may be applied to at least a part of the second electrode 220. The second active material layer may also be applied to both surfaces of the second electrode 220, or alternatively, may be applied to only one surface of the second electrode 220. As the second electrode 220 functions as the negative electrode, the second active material layer may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide. The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may be silicon, a silicon-carbon composite, SiOₓ (x is 1 or 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles. In one example, the silicon primary particles may be coated with the amorphous carbon. Additionally, the secondary particles may be dispersed in an amorphous carbon matrix.

The silicon-carbon composite may further include crystalline carbon. In one example, the silicon-carbon composite may include a core including crystalline carbon and silicon particles and an amorphous carbon coating layer located on a surface of the core. The Si-based negative electrode active material or Sn-based negative electrode active material may be used in combination with the carbon-based negative electrode active material. The second active material layer may further include a negative electrode conductive material and a negative electrode binder.

The negative electrode conductive material may be used to impart conductivity to the second active material layer, and any electronically conductive material that does not cause an undesirable chemical change in a battery may be used. Examples of the negative electrode conductive material may include a carbon-based material such as natural graphite, artificial graphite, carbon black, acetylene black, Ketjen black, carbon fibers, carbon nanofibers, carbon nanotubes, or the like, a metal-based material in the form of a metal powder or metal fiber containing copper, nickel, aluminum, silver, or the like, a conductive polymer such as a polyphenylene derivative, or a mixture thereof.

The negative electrode binder serves to attach the negative electrode active material particles to each other, and also serves to attach the negative electrode active material to the substrate of the second electrode 220. An example of the negative electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the negative electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. As the alkali metal, Na, K, or Li may be used.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may be electrically connected to the case 100. In one example, the second electrode 220 may be electrically connected to the case 100 by a second electrode tab E2. When the second electrode 220 functions as a negative electrode of the electrode assembly 200, the case 100 may function as a negative electrode terminal of the rechargeable battery 2. The second electrode tab E2 may be formed of a conductive metallic material such as copper, a copper alloy, nickel, or a nickel alloy. The second electrode tab E2 may be at a lower side of the electrode assembly 200, and both end portions of the second electrode tab E2 may be respectively connected to the second electrode 220 and the bottom portion 120 of the case 100. One end portion of the second electrode tab E2 may be directly connected to the second electrode 220, and may also be indirectly connected to the second electrode 220 through a separate current collecting plate (not shown) connected to the second electrode 220. However, the second electrode 220 is not limited thereto, and may also be directly connected to the case 100 without the second electrode tab E2.

The separator 230 may be between the first electrode 210 and the second electrode 220. The separator 230 may perform a function of preventing a short circuit between the first electrode 210 and the second electrode 220 while allowing lithium ions to move between the first electrode 210 and the second electrode 220. As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof located on one surface or both surfaces of the porous substrate. The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, and polytetrafluoroethylene (such as Teflon), or a copolymer or mixture of two or more thereof.

The organic material may include a polyvinylidene fluoride-based polymer or a (meth)acryl-based polymer. The inorganic material may include, but is not limited thereto, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. The organic material and the inorganic material may be present as a mixture in a single coating layer or may be present in a form, where a coating layer including an organic material and a coating layer including an inorganic material are stacked.

The separator 230 may be provided as a pair of separators. The pair of separators 230 may face both surfaces of the first electrode 210 or the second electrode 220, respectively. The pair of separators 230 may be wound around a winding axis together with the first electrode 210 and the second electrode 220.

A first insulating plate 201 and a second insulating plate 202 may be on both sides (upper and lower sides in FIG. 3) of the electrode assembly 200, respectively. The first insulating plate 201 and the second insulating plate 202 may include an insulating material such as rubber, polyethylene (PE), polypropylene (PP), polyethylene terephthalate (PET), or the like.

The first insulating plate 201 may be formed to have a substantially circular plate shape. The first insulating plate 201 may be between an upper surface of the electrode assembly 200 and the cap assembly 300. Accordingly, the first insulating plate 201 may block the upper surface of the electrode assembly 200 from coming into direct contact with the cap assembly 300. The first insulating plate 201 may also insulate the electrode assembly 200 and the cap assembly 300 from each other. In addition, a through hole (not shown) through which the first electrode tab E1 may pass may be formed in the first insulating plate 201.

The second insulating plate 202 may be formed to have a substantially circular plate shape. The second insulating plate 202 may be between a lower surface of the electrode assembly 200 and the bottom portion 120 of the case 100. Accordingly, the second insulating plate 202 may block the lower surface of the electrode assembly 200 from coming into direct contact with the bottom portion 120 of the case 100 and insulate the electrode assembly 200 and the bottom portion 120 of the case 100 from each other. A through hole (not shown) through which the second electrode tab E2 may pass may be formed in the second insulating plate 202.

The cap assembly 300 may be at the upper end portion of the side wall portion 110, that is, the opening 130. The opening 130 of the case 100 may be sealed by the cap assembly 300, and to this end, the cap assembly 300 may be coupled to the case 100. A beading portion 140 formed to be concave toward the central axis C of the case 100 may be formed in the side wall portion 110. The beading portion 140 is at a lower side of the cap assembly 300, and may prevent the cap assembly 300 from being inserted into the case 100 more than a predetermined distance. A crimping portion 150 where the upper end portion of the side wall portion 110 is bent toward the central axis C of the case 100 may be formed on an upper side of the beading portion 140. The crimping portion 150 may be on the upper side of the cap assembly 300 and may prevent the cap assembly 300 from being separated from the case 100.

A gasket G may be between the case 100 and the cap assembly 300. The gasket G may function as a component that, by its own elastic restoring force, fixes the position of the cap assembly 300 in the opening 130, electrically insulates the case 100 and the cap assembly 300 from each other, and prevents moisture or an electrolyte from flowing in or out between the case 100 and the cap assembly 300. The gasket G may include an insulating material such as rubber, polyethylene (PE), polypropylene (PP), or polyethylene terephthalate (PET). The gasket G may be formed to have a substantially ring shape and may be on an inner side of the beading portion 140 and/or the crimping portion 150. An outer surface of the gasket G may be in close contact with the inner surface of the beading portion 140 and/or the crimping portion 150, and an inner surface of the gasket G may be in close contact with the outer surface of the cap assembly 300.

As described above, the cap assembly 300 may be electrically connected to the first electrode 210 by the first electrode tab E1. Since the first electrode 210 functions as a positive electrode of the electrode assembly 200, the cap assembly 300 may function as a positive electrode terminal of the rechargeable battery 2.

The cap assembly 300 is formed in a structure capable of blocking the flow of current, when the pressure inside the case 100 is increased due to an overcurrent or the like, thereby blocking the electrical connection between the rechargeable battery 2 and an external device. The cap assembly 300 may be formed in a structure that can rupture when the pressure inside the case 100 increases above a set level, thereby allowing the space inside and outside the case 100 to communicate with each other. Consequently, the cap assembly 300 may reduce the risk of the rechargeable battery 2 exploding when overcurrent occurs.

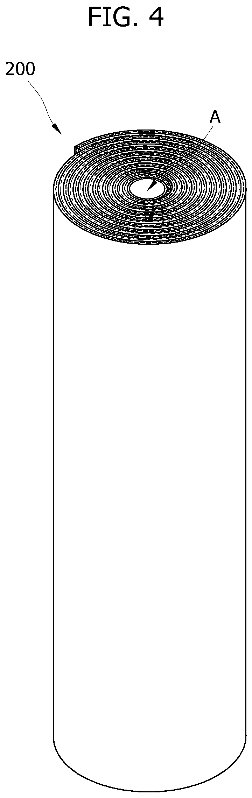

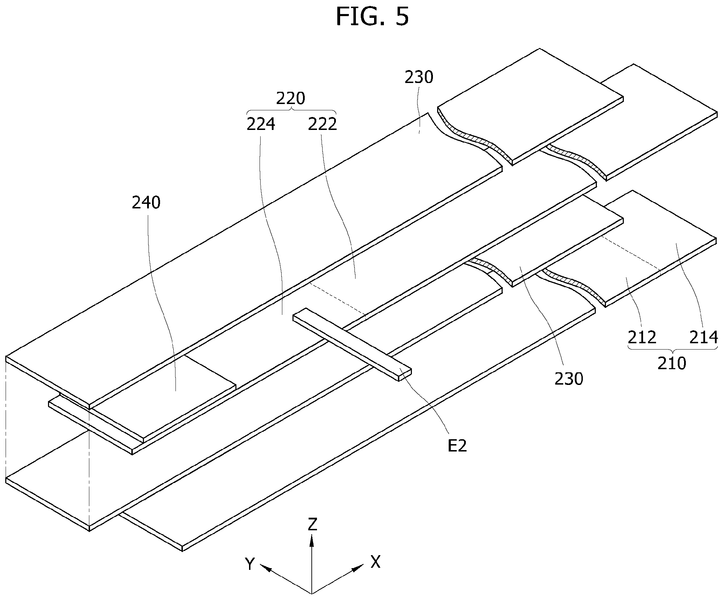

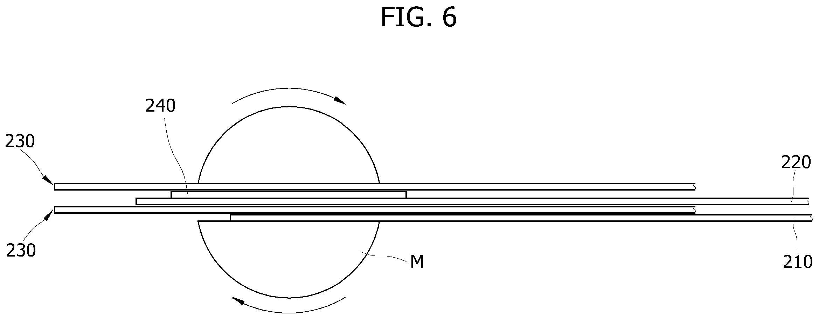

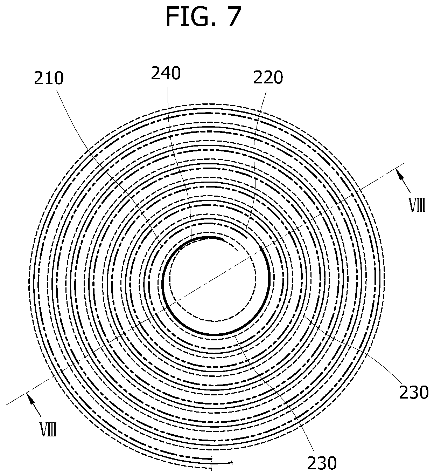

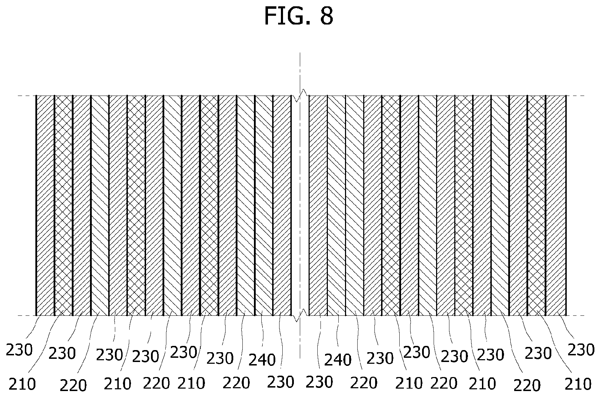

FIG. 4 illustrates a configuration of an electrode assembly according to one embodiment. FIG. 5 illustrates a view illustrating an electrode and a separator constituting the electrode assembly of FIG. 4 in a separated state. FIG. 6 illustrates a view in which a laminate of the electrode and the separator of FIG. 5 is inserted into a mandrel and wound. FIG. 7 illustrates an enlarged part of the wound electrode assembly. FIG. 8 illustrates a view taken along line VIII-VIII of FIG. 7. Referring to FIGS. 4 to 8, the electrode assembly 200 has a cylindrical shape formed by winding a laminate stacked in the order of the first electrode 210, the separator 230, the second electrode 220, and the separator 230 multiple times. Such an electrode assembly 200 is generally referred to as a jelly-roll shape.

The cylindrical electrode assembly 200 may be manufactured by holding a free part of the separator 230 protruding in a longitudinal direction (X-axis direction, see FIG. 5) more than the first electrode 210 or the second electrode 220 with a rod-shaped mandrel M and winding a laminate in which a sheet-shaped first electrode 210, a sheet-shaped separator 230, a sheet-shaped second electrode 220, and a sheet-shaped separator 230 are alternately stacked multiple times. In this case, the mandrel M may be a winding axis of the electrode assembly 200 and the winding axis may be parallel to the Y-axis, which is the short side direction of the separator 230. In addition, when the electrode assembly 200 is inserted into the case 100, the winding axis may be parallel to the central axis C (see FIG. 3) of the case 100. When the mandrel M is removed after the laminate is wound, the central portion (the winding core A) of the jelly-roll-shaped electrode assembly 200 is empty.

The first electrode 210, the second electrode 220, and the separator 230 may have a sheet shape in which a long side (X-axis direction) is relatively longer than a short side (Y-axis direction). The 'sheet shape' may refer to a structure having a constant thickness and generally having a rectangular planar shape. The length of the short side may vary depending on the height of the rechargeable battery including the electrode assembly 200.

The length of the long side may vary depending on the number of windings of the laminate constituting the electrode assembly 200. In general, among the first electrode 210, the second electrode 220, and the separator 230, the length of the long side of the separator 230 may be the longest. In addition, in the present embodiment, the length of the second electrode 220 may be longer than the length of the first electrode 210. A space may be provided on the second electrode 220. The space may be one to which an expansion film 240 may be attached. For purposes of description, the first electrode 210 may be a positive electrode, and the second electrode 220 may be a negative electrode.

Even in the case of the short side, among the first electrode 210, the second electrode 220, and the separator 230, the length of the short side of the separator 230 may be the longest. In addition, the length of the short side of the second electrode 220 may be longer than the length of the short side of the first electrode 210. However, this is merely an example, and the short side length of each of the first electrode 210, the second electrode 220, and the separator 230 is not limited thereto.

As illustrated in FIG. 5, the first electrode 210 and the second electrode 220 may respectively include coated portions 212 and 222 in which an active material layer is formed on at least one surface of the substrate, and uncoated portions 214 and 224 in which the active material layer is not formed and the substrate is exposed as is. For example, in the case of the first electrode 210, the uncoated portion 214 may be located at a rear end portion forming the outermost portion of the electrode assembly 200 as a finish portion of the winding. And in the case of the second electrode 220, the uncoated portion 224 may be located at a front end portion forming the winding core of the electrode assembly 200 as a start portion of the winding. However, this is merely an example, and the positions of the uncoated portions 214 and 224 in the first electrode 210 and the second electrode 220 may be interchanged. Alternatively, in each of the first electrode 210 and the second electrode 220, the uncoated portions 214 and 224 do not necessarily have to be located at the front end portion or the rear end portion, and rather, may be located between the coated portions 212 and 222 divided into a plurality of portions.

The first electrode tab E1 (see FIG. 3) may be bonded to the uncoated portion 214 of the first electrode 210 and may extend outward. The first electrode tab E1 may be electrically connected to the cap assembly 300 in the wound state. In addition, the second electrode tab E2 may be bonded to the uncoated portion 224 of the second electrode 220 and may extend outward. The second electrode tab E2 may be electrically connected to the case 100 in the wound state.

The electrode assembly 200 may further include the expansion film 240 attached to the second electrode 220. Here, the second electrode 220 corresponds to an electrode located closer to the winding core A in the wound state. Because the expansion film 240 is attached to the second electrode 220 closer to the winding core A among the first electrode 210 and the second electrode 220, it is possible to more effectively prevent the second electrode 220 from moving and/or stress from being concentrated on the winding core A due to the empty space of the winding core A.

Generally, in a cylindrical rechargeable battery, the number of charge and discharge cycles increases as the life cycle progresses, and the electrodes 210 and 220 expand. In addition, as the electrodes 210 and 220 expand, movement and deformation mainly occur. The deformation can occur in various manners, such as by bending of the second electrode 220 adjacent to the winding core A. Such deformation of the second electrode 220 causes damage to the separator 230 adjacent thereto, thereby causing an internal short circuit or causing heat generation or ignition.

According to the present embodiment, the expansion film 240 is attached to the second electrode 220, which is an electrode closer to the winding core A where stress is concentrated by the expansion of the electrodes 210 and 220. The expansion film 240 serves as a support for suppressing the movement of the second electrode 220, thereby more effectively suppressing or preventing the movement of the second electrode 220 and the resulting deformation such as bending. Since the expansion film 240 is attached to the second electrode 220, the deformation of the second electrode 220 itself may be more effectively prevented, in comparison to attaching to the separator 230 exposed to the winding core A or the first electrode 210 located outside the second electrode 220.

In addition, in the electrode assembly 200, the member directly exposed to the winding core A is the separator 230. For example, only the separator 230 may be wound one or two turns at the winding core A. Accordingly, even when the expansion film 240 on the second electrode 220 expands, the second electrode 220 is supported by the separator 230 located inside, so that the expanded expansion film 240 may further strengthen the support force, thereby more effectively preventing deformation of the second electrode 220.

The expansion film 240 may be attached to one surface of the second electrode 220. As a result, the attachment of the expansion film 240 may be minimized, and an increase in the size of the electrode assembly 200 or a decrease in impregnation due to the expansion film 240 may be minimized. However, the present invention is not limited thereto, and the expansion films 240 may be attached to both surfaces of the second electrode 220. As a result, the effect of preventing deformation of the second electrode 220 by the expansion film 240 may be maximized.

When the expansion film 240 is attached to one surface of the second electrode 220, it may be attached to the inner surface of the second electrode 220, that is, the surface facing the winding core A. That is, the order from the winding core A to the outside may be the separator 230, the expansion film 240, and the second electrode 220 (see FIG. 8). Accordingly, the expansion film 240 may expand from the inner surface of the second electrode 220 toward the winding core A. That is, the expansion film 240 may expand toward the extra separator 230 exposed to the winding core A. As a result, since the expansion film 240 is supported by the separator 230, even when the expansion force is directed toward the winding core A, due to repeated charging and discharging, the expansion film 240 may function as a support for preventing the movement and bending of the second electrode 220.

The expansion film 240 may be attached to the uncoated portion 224 of the second electrode 220. When the expansion film 240 is attached to the coated portion 222 of the second electrode 220, that is, the active material layer, it may cause a reduction in the capacity of the electrode assembly 200. On the other hand, when the expansion film 240 is attached to the uncoated portion 224 of the second electrode 220, the problem of capacity reduction may not occur.

The uncoated portion 224 of the second electrode 220 may have a length corresponding to or greater than the length of the expansion film 240 attached thereto, so that the expansion film 240 may be attached only to the uncoated portion 224 and not the coated portion 222 of the second electrode 220. For example, as will be described below, when the expansion film 240 has a length between 1 and 3 turns around the winding core A, the uncoated portion 224 of the second electrode 220 may also have a length between 1 and 3 turns or more around the winding core A. The length of the uncoated portion 224 of the second electrode 220 may be longer than the length of the uncoated portion of the conventional second electrode, in a case where the expansion film 240 is not attached.

The expansion film 240 has a property of expanding by absorbing the electrolyte. Therefore, when the electrode assembly 200 is inserted into the case 100, the expansion film 240 maintains an unexpanded state. On the other hand, when the electrode assembly 200 is inserted into the case 100 and an electrolyte is injected into the case 100 through an injection process, the expansion film 240 expands. As a result, since the expansion film 240 serves as a support for the second electrode 220, which is an attachment member, it is possible to prevent the second electrode 220 from being deformed, even when stress is concentrated toward the winding core A.

The type of expansion film 240 is not particularly limited as long as it is a material having a property of expanding by absorbing an electrolyte. For example, the expansion film 240 may be formed of a material including polyvinylidene fluoride (PVDF) or a material including polyvinylidene fluoride and a binder.

The expansion film 240 may be formed to have a length capable of winding the second electrode 220 adjacent to the winding core A about 1 to 3 times, that is, a length of 1 to 3 turns. Here, the length of the expansion film 240 may indicate a size in the X-axis direction based on FIG. 5. When the length of the expansion film 240 is less than one turn, that is, the second electrode 220 is not completely surrounded, movement and bending of the second electrode 220 may not be sufficiently prevented. On the other hand, when the length of the expansion film 240 is more than 3 turns, the expansion film 240 itself may not sufficiently come into contact with an electrolyte, and may also cause the impregnation property of the electrode assembly 200 to deteriorate.

A width of the expansion film 240 may be equal to or less than a width of the second electrode 220. When the expansion film 240 and the second electrode 220 have the same width, movement or bending of the second electrode 220 may be prevented over the entire width direction (Y-axis direction of FIG. 5) of the second electrode 220. However, even when the width of the expansion film 240 is less than the width of the second electrode 220, when the expansion film 240 has a width of a certain level or more (e.g., 70% to 80% or more of the width of the second electrode 220), the function of preventing the movement or bending of the second electrode 220 may be performed.

According to an embodiment of the present invention, even when charging and discharging are repeated according to the use of a rechargeable battery, a winding core can maintain its original shape, thereby preventing degradation of performance of the rechargeable battery or heat generation and ignition. However, the effects obtained through the present invention are not limited to the above-described effects, and other technical effects that are not mentioned will be clearly understood by those skilled in the art from the description of the invention described below.

Although the present invention has been described with reference to the embodiments shown in the drawings, these embodiments are merely exemplary, and it should be understood by those skilled in the art that various modifications and equivalents are possible.

## Claims

1. An electrode assembly (200) comprising:
a cylindrical electrode assembly (200) comprising a laminate of stacked electrodes (210, 220) and separators (230) wound about a winding core (A), and
an expansion film (240) attached to an electrode (220) of the electrodes (210, 220) that is adjacent to the winding core (A).

2. The electrode assembly (200) according to claim 1, wherein the separator (230) is exposed to the winding core (A), and
wherein the expansion film (240) is attached to an electrode (220) of the electrodes (210, 220), the electrode (220) being in contact with a separator (230) of the separators (230) that is exposed to the winding core (A).

3. The electrode assembly (200) according to claim 2, wherein the expansion film (240) is attached to only one surface of the electrode (220) that is in contact with the separator (230).

4. The electrode assembly (200) according to claims 2 or 3, wherein the one surface of the electrode (220) faces the winding core (A).

5. The electrode assembly (200) according to claim 2, wherein the expansion film comprises two expansion films (240), and the two the expansion films (240) are attached to two opposite surfaces of the electrode (220) that is in contact with the separator (230) that is exposed to the winding core (A), respectively.

6. The electrode assembly (200) according to any of claims 2 to 5, wherein the expansion film (240) is attached with a length of 1 to 3 turns.

7. The electrode assembly (200) according to any one of the preceding claims, wherein the electrode (220) includes a coated portion (222) where an active material layer is formed on at least one surface thereof and an uncoated portion (224) where the active material layer is not provided, and
wherein the expansion film (240) is attached to the uncoated portion (224).

8. The electrode assembly (200) according to any one of the preceding claims, wherein the expansion film (240) is configured to expand by an electrolyte of a rechargeable battery (2) that includes the electrode assembly (200).

9. The electrode assembly (200) according to claim 8, wherein the expansion film (240) is formed of a material including polyvinylidene fluoride (PVDF) or a material including polyvinylidene fluoride and a binder.

10. The electrode assembly (200) according to any one of the preceding claims, wherein in the laminate, a first electrode (210) of the electrodes (210, 220), a first separator (230) of the separators (230), a second electrode (220) of the electrodes (210, 220), and a second separator (230) of the separators (230) are sequentially stacked such that the second separator (230) is exposed to the winding core (A), and
wherein the expansion film (240) is attached to the second electrode (220).

11. The electrode assembly (200) according to claim 10, wherein the first electrode (210) is a positive electrode and the second electrode (220) is a negative electrode.

12. A rechargeable battery (2) comprising:
a case (100); and
the electrode assembly (200) according to any one of claims 1 to 11.

13. A battery pack comprising:
a housing (1); and
a plurality of rechargeable batteries (2) inside the housing (1),
wherein each of the rechargeable batteries (2) is the rechargeable battery (2) according to claim 12.
